# EUROPEAN PATENT SPECIFICATION

(11) **EP 3 553 660 B1**
(45) Date of publication and mention of the grant of the patent: **03.02.2021**
(21) Application number: 17879532.4
(22) Date of filing: 05.12.2017
(51) Int. Cl.: G06F 11/10, F02D 45/00, G06F 3/06, G06F 12/00, G06F 13/28, F02D 41/24

(54) **CONTROL DEVICE AND METHOD FOR WRITING DATA TO CONTROL DEVICE**
STEUERUNGSVORRICHTUNG UND VERFAHREN ZUM SCHREIBEN VON DATEN AUF EINE STEUERUNGSVORRICHTUNG
DISPOSITIF DE COMMANDE ET PROCÉDÉ D'ÉCRITURE DE DONNÉES DANS UN TEL DISPOSITIF DE COMMANDE

(30) Priority: 07.12.2016 JP 2016237752
(43) Date of publication of application: 16.10.2019
(73) Proprietor: Isuzu Motors Limited, Tokyo 140-8722 (JP)
(72) Inventor: WAKABAYASHI, Tadahito, Fujisawa-shi Kanagawa 252-0881 (JP); KODAMA, Hirotaka, Yokohama-shi Kanagawa 222-0033 (JP)
(74) Representative: Dennemeyer & Associates S.A.
(86) International application number: PCT/JP2017/043575
(87) International publication number: WO 2018/105587

(56) References cited:
- EP-A1- 2 365 444
- EP-A1- 2 770 432
- EP-A2- 1 898 078
- JP-A- 2005 135 260
- JP-A- 2005 135 260
- JP-A- 2007 286 813
- JP-A- 2007 286 813
- JP-A- 2013 068 105

## Description

### Technical Field

This disclosure relates to a control apparatus for a vehicle, and a method for writing data to the control apparatus.

### Background Art

An electronic control apparatus (called "ECU (Electronic Control Unit)") for a vehicle is provided with a nonvolatile memory where data can be electrically erased and written. ECU controls a vehicle-mounted apparatus (for example, a fuel injector) according to a control program, calibration data and the like stored in a nonvolatile memory. Reduction in time required for writing the control program and the calibration data into the nonvolatile memory improves the production efficiency of ECU.

PTL 1 discloses that ECU executes, in parallel, a reception process of receiving divided data obtained by dividing data to be written and of copying the received divided data to one buffer area between first and second buffer areas, and a process of writing divided data stored in the other buffer area into ROM using the other buffer area. PTL 1 also discloses that ECU uses, for the next writing process, the buffer area used for the reception process, while using, for the next receiving process, the buffer area used for the EP 2 770 432 A1 discloses an ECU for a vehicle and a data communication writing process. method for reducing the time required to transfer the data to be written into a nonvolatile memory.

### Citation List

### Patent Literature

PLT 1
Japanese Patent Application Laid-Open No. 2013-68105

### Summary of Invention

### Technical Problem

Unfortunately, the amount of data to be written in a memory of ECU has been increasing. Improvement in production efficiency of ECU requires further reduction in the entire time required for the process of writing data into the memory.

An object of this disclosure is to reduce the entire time required for the process of writing data into the memory of the control apparatus (ECU).

### Solution to Problem

The problem is solved by means of the control apparatus of claim 1 and the method of claim 3.

### Advantageous Effects of Invention

This disclosure can reduce the entire time required for the process of writing data into the memory of the control apparatus (ECU).

### Brief Description of Drawings

FIG. 1 illustrates a configuration example of a control apparatus according to this embodiment;
FIG. 2 is a sequence chart illustrating an example of a process of writing data;
FIG. 3 is a flowchart illustrating an example of a process of writing data in a writing apparatus; and
FIG. 4 is a flowchart illustrating an example of a process of writing data in CPU (Central Processing Unit) of ECU.

### Description of Embodiments

Hereinafter, referring to the accompanying drawings, embodiments according to this disclosure are described.

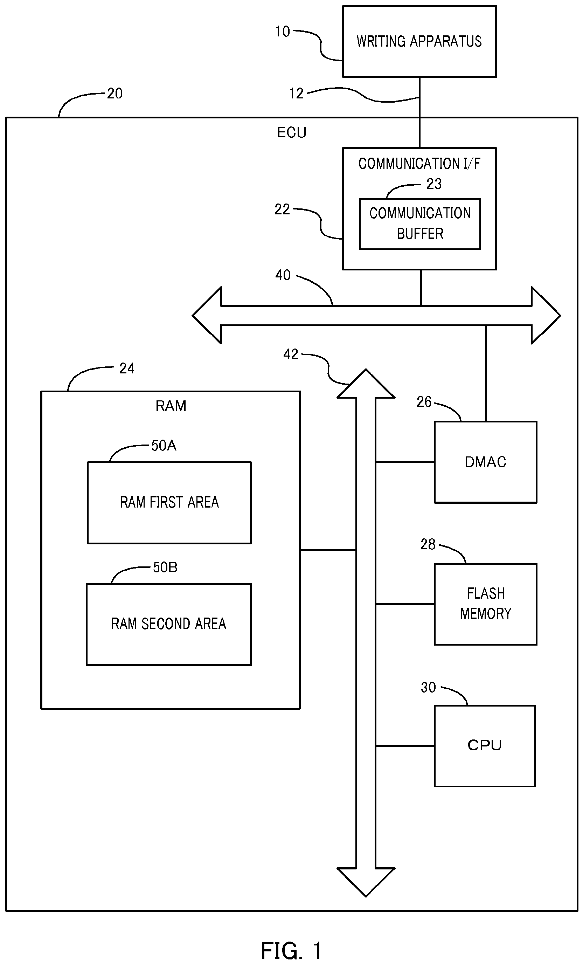

FIG. 1 illustrates a configuration example of a control apparatus according to this embodiment.

In a factory, data is written into ECU 20 that is an example of a control apparatus for a vehicle, from writing apparatus 10 that is an apparatus for writing required data into ECU 20. The data required for ECU 20 is, for example, an engine control program, and calibration data pertaining to engine control. Writing apparatus 10 writes data into ECU 20 via CAN (Controller Area Network) 12 that is an example of a communication network.

ECU 20 includes communication I/F (Interface) 22, DMAC (Direct Memory Access Controller) 26, flash memory 28, RAM (Random Access Memory) 24, and CPU 30.

Communication I/F 22 and DMAC 26 are connected to each other via first bus 40 in a bidirectionally communicable manner. CPU 30, DMAC 26, flash memory 28, and RAM 24 are connected to each other via second bus 42 in a bidirectionally communicable manner. Second bus 42 achieves a higher communication rate than that of first bus 40.

Communication I/F 22 is I/F that controls data transmission and reception according to a communication protocol of CAN 12. Communication I/F 22 includes communication buffer 23, and temporarily stores, in communication buffer 23, frame data transmitted from writing apparatus 10 via CAN 12.

Flash memory 28 (functioning as a first storage section of this disclosure) is a nonvolatile memory that stores the engine control program, the calibration data and the like, which have been read from CPU 30. Instead of flash memory 28, for example, a nonvolatile memory, such as SRAM (Static RAM) or EEPROM (Electrically Erasable Programmable Read-Only Memory), maybe adopted.

RAM 24 (functioning as a second storage section of this disclosure) is a memory that temporarily stores a program to be executed by CPU 30, and data. RAM 24 may be a volatile memory or a nonvolatile memory, and has a higher I/O rate than that of flash memory 28.

DMAC 26 controls transfer of data stored in communication buffer 23 to RAM 24. DMAC 26 thus controls the transfer to RAM 24, thereby reducing the load related to I/O control by CPU 30.

During vehicle traveling, CPU 30 executes the program and data stored in flash memory 28, thereby achieving the function of ECU 20 (functioning as a control section of this disclosure).

However, in this embodiment, CPU 30 executes a program (called "flash write program") that achieves a process of writing data into flash memory 28, in a process of producing ECU 20 in a factory or the like. The flash write program is stored in a predetermined nonvolatile memory of ECU 20, and is executed by CPU 30 receiving a factory mode start request from writing apparatus 10. Accordingly, the flash write program is not executed during normal vehicle traveling. In the process of producing ECU 20, two transfer destination areas that are RAM first area 50A and RAM second area 50B, are secured in RAM 24.

In the process of producing ECU 20, CPU 30 designates, for DMAC 26, one transfer destination area (for example, RAM first area 50A) as a transfer destination of a data block to be transmitted from writing apparatus 10. DMAC 26 transfers the data block transmitted from writing apparatus 10, to the one transfer destination area (for example, RAM first area 50A). Upon completion of transfer of one data block to the one transfer destination area, DMAC 26 notifies CPU 30 of this completion. Upon receipt of the notification, CPU 30 transmits, to writing apparatus 10, a check value (for example, a check sum) of one data block transferred to the one transfer destination area.

Writing apparatus 10 determines whether the check value transmitted from CPU 30 is appropriate or not. If this apparatus determines that the check value is appropriate, this apparatus transmits a block transmission start request to CPU 30 before transmission of the next data block. For example, writing apparatus 10 holds the check value of the data block transmitted to CPU 30, and determines whether this value coincides with the check value of the data block transmitted from CPU 30 or not.

When a predetermined number of data blocks are transferred to the one transfer destination storage area (for example, RAM first area 50A) and the block transmission start request is received from writing apparatus 10, CPU 30 designates, for DMAC 26, the other transfer destination area (for example, RAM second area 50B) as the data block transfer destination.

Upon receipt of designation of the other transfer destination area from CPU 30, DMAC 26 issues an instruction (called "flash write instruction") of writing, into flash memory 28, the predetermined number of data blocks in the one transfer destination area, to a controller of flash memory 28 (called "flash memory controller").

DMAC 26 may have a configuration of issuing the flash write instruction when, for example, completing transfer of the predetermined number of data blocks to the transfer destination area without receiving the designation of the transfer destination area from CPU 30.

According to the configuration described above, reception of the block transmission start request pertaining to the first data block to be transferred to the other transfer destination area serves as a trigger to switch the data block transfer destination to the other transfer destination area, and the predetermined number of data blocks in the one transfer destination area are written into flash memory 28. The block transmission start request is information for making a query of whether writing apparatus 10 may transmit the next data block to ECU 20 or not, but is not information for allowing writing apparatus 10 to instruct ECU 20 to switch the transfer destination area. Consequently, the need to exchange information for switching the transfer destination area between writing apparatus 10 and CPU 30 is negated. As a result, the time required for data transmission from writing apparatus 10 to ECU 20 is reduced. Writing apparatus 10 checks the corruption of the data block based on the check value transmitted from CPU 30, thereby reducing the processing load on CPU 30. As a result, the time required to write data into flash memory 28 is reduced. Such reduction, in turn, reduces the entire time of the process of writing data into flash memory 28, and improves the production efficiency of ECU 20.

Writing apparatus 10 divides the data block into multiple frames, and sequentially transmits the frames. DMAC 26 transfers the frames transmitted from writing apparatus 10, to the transfer destination area designated by CPU 30, in the order of reception.

The configuration described above can negate the need of the number information indicating the position of the frame in the data block. Accordingly, the amount of data transmission from writing apparatus 10 to ECU 20 can be reduced.

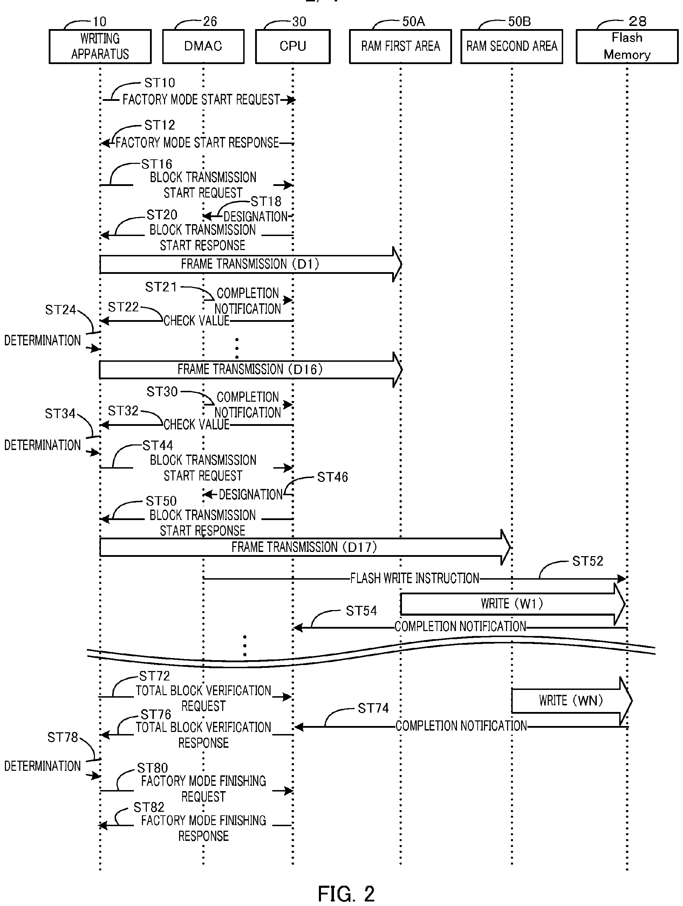

Next, a specific example of the process of writing data into ECU 20 during the process of producing ECU 20 is described with reference to FIG. 2. In this embodiment, each of the sizes of RAM first area 50A and RAM second area 50B is 16 blocks. The size of one block is 256 frames. The size of one frame is 8 bytes.

FIG. 2 is a sequence chart illustrating an example of the process of writing data.

First, writing apparatus 10 transmits the factory mode start request to CPU 30 (ST10).

Next, upon receipt of the factory mode start request in ST10, CPU 30 starts the factory mode. That is, the flash write program described above is executed. CPU 30 then transmits a factory mode start response to writing apparatus 10 (ST12).

Upon receipt of the factory mode start response in ST12, writing apparatus 10 transmits, to CPU 30, the block transmission start request as a start process pertaining to the first block (ST16).

Upon receipt of the block transmission start request in ST16, CPU 30 designates, for DMAC 26, RAM first area 50A as the transfer destination area for 256×16 frames (that is, equivalent to 16 blocks) scheduled to be stored in communication buffer 23 (ST18). The process of switching the transfer destination area is called "transfer destination switching process."

Next, CPU 30 transmits a block transmission start response to writing apparatus 10 (ST20). At this time, CPU 30 counts the number of received block transmission start requests.

Upon receipt of the block transmission start response in ST20, writing apparatus 10 divides the first block into multiple frames, and sequentially transmits the frames to communication I/F 22. DMAC 26 transfers the frames stored in communication buffer 23 to RAM first area 50A that is the transfer destination area, in the order of reception (D1).

After completion of transfer of 256 frames (equivalent to the first block) to RAM first area 50A, DMAC 26 transmits the completion notification to CPU 30 (ST21).

Upon receipt of the completion notification in ST21, CPU 30 calculates the check value pertaining to the first block transferred to RAM first area 50A. CPU 30 then transmits the calculated check value to writing apparatus 10 (ST22). The check value is, for example, the check sum value of data equivalent to the first block. CPU 30 counts the number of received completion notifications from DMAC 26.

Upon receipt of the check value pertaining to the first block in ST22, writing apparatus 10 determines whether the received check value is appropriate or not (ST24). For example, if the received check value coincides with the preliminarily stored check value pertaining to the transmitted first block, writing apparatus 10 determines that the value is appropriate. On the contrary, if the value does not coincide, this apparatus determines that the value is inappropriate. When writing apparatus 10 determines that the check value is inappropriate, this apparatus stops the process of writing data. This is because the data stored in RAM 24 is corrupted.

If writing apparatus 10 determines that the check value is correct, this apparatus transmits, to CPU 30, the block transmission start request as that for a process pertaining to the second block. The process pertaining to the second block is analogous to the process pertaining to the first block described above. Accordingly, the description thereof is omitted. The process pertaining to the 16th block (D16) and thereafter are described.

When transfer of the 16th block to RAM first area 50A is completed, that is, the number of received frames pertaining to the 16th block reaches "256," DMAC 26 transmits the completion notification to CPU 30 (ST30).

Upon receipt of the completion notification in ST30, CPU 30 calculates the check value pertaining to the 16th block stored in RAM first area 50A. CPU 30 then transmits the calculated check value to writing apparatus 10 (ST32). CPU 30 counts the number of completion notifications received from DMAC 26. As a result, the number of completion notifications reaches "16," which corresponds to the size of RAM first area 50A. Accordingly, CPU 30 can recognize that the block data is stored in RAM first area 50A as much as possible.

If writing apparatus 10 determines that the check value of the 16th block is correct (ST34), this apparatus transmits, to CPU 30, the block transmission start request as that for a process pertaining to the 17th block (ST44).

CPU 30 recognizes that the block data is stored in RAM first area 50A as much as possible as described above. Accordingly, upon receipt of the block transmission start request in ST44, CPU 30 executes the transfer destination switching process. That is, CPU 30 designates, for DMAC 26, RAM second area 50B as the transfer destination area for 256×16 frames (that is, equivalent to 16 blocks) scheduled to be stored in communication buffer 23 (ST46). Accordingly, the transfer destination of the 17th to 32th blocks is switched to RAM second area 50B.

Next, CPU 30 transmits the block transmission start response to writing apparatus 10 (ST50). CPU 30 transmits the block transmission start response without waiting for the completion notification about the following flash write process (ST54). This is because the 17th to 32th blocks scheduled to be received are transferred to switched RAM second area 50B.

Upon receipt of the block transmission start response in ST50, writing apparatus 10 divides the 17th block into multiple frames, and sequentially transmits the frames to communication I/F 22. DMAC 26 transfers the frames stored in communication buffer 23 to RAM second area 50B that is the transfer destination area, in the order of reception (D17).

If the number of received frames has reached "256×16" and the last flash write process has been completed accordingly, DMAC 26 issues, to the flash memory controller, an instruction for writing the first to 16th blocks stored in RAM first area 50A into flash memory 28 (flash write instruction) (ST52).

The flash memory controller having received the instruction in ST52 starts a process of writing the first to 16th blocks in RAM first area 50A into flash memory 28 (W1). The process of writing data in RAM first area 50A or RAM second area 50B into flash memory 28 is called a flash write process. Upon completion of the flash write process, the flash memory controller issues the completion notification to CPU 30 (ST54).

The process described above can execute, in parallel, a process of writing the data stored in RAM first area 50A or RAM second area 50B into flash memory 28, and a process of transferring the data to be transmitted from writing apparatus 10 to RAM first area 50A or RAM second area 50B.

Next, a process after transmission of the frames equivalent to the final block from writing apparatus 10 is described.

After completion of transmitting the data equivalent to the final block, writing apparatus 10 transmits a total block verification request to CPU 30 (ST72).

Upon receipt of the total block verification request in ST72, CPU 30 stands by for transmission of the completion notification pertaining to the final data (ST74) from the flash memory controller.

Upon receipt of the completion notification in ST74, CPU 30 verifies whether all the blocks are correctly written in flash memory 28 or not, and transmits, to writing apparatus 10, a total block verification response that includes the verification result (ST76).

Upon receipt of the total block verification response in ST76, writing apparatus 10 confirms the verification result included in the response (ST78). If the verification result in ST78 is "abnormal," writing apparatus 10 abnormally terminates the process of writing data. This is because the data written in flash memory 28 is corrupted.

When the verification result in ST78 is "normal," writing apparatus 10 transmits, to CPU 30, a factory mode finishing request (ST80).

Upon receipt of the factory mode finishing request, CPU 30 finishes the factory mode, and transmits the factory mode finishing response to writing apparatus 10 (ST82).

Upon receipt of the factory mode finishing response in ST82, writing apparatus 10 normally finishes the data writing process.

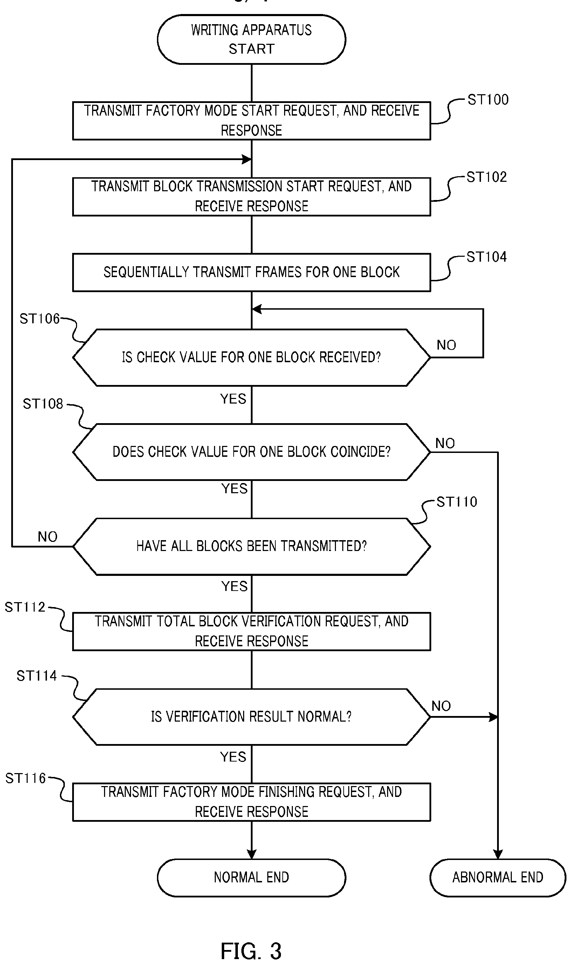

FIG. 3 is a flowchart illustrating an example of the process of writing data in writing apparatus 10.

Writing apparatus 10 transmits the factory mode start request to ECU 20 (ST100).

Upon receipt of the factory mode start response for ST100 from ECU 20, writing apparatus 10 transmits the block transmission start request to ECU 20 (ST102).

Next, upon receipt of the block transmission start response for ST102 from ECU 20, writing apparatus 10 sequentially transmits the frames to ECU 20 (ST104).

Next, upon completion of transmitting frames equivalent to one block, writing apparatus 10 stands by for transmission of the check value for one block from ECU 20 (ST106: NO).

Upon receipt of the check value (ST106: YES), writing apparatus 10 determines whether the check value for one block transmitted in ST104 coincides with the check value received in ST106 or not (ST108).

If the determination result in ST108 is "inconsistent" (ST108: NO), writing apparatus 10 abnormally terminates the process of writing data.

On the contrary, if the determination result in ST108 is "consistent"(ST108: YES), writing apparatus 10 determines whether transmission of all the blocks has been completed or not (ST110).

Any untransmitted block remains as a result of determination in ST110 (ST110: NO), writing apparatus 10 returns the processing to ST102, and transmits the remaining untransmitted block.

If the transmission of all the blocks has been completed as a result of the determination in ST110 (ST110: YES), writing apparatus 10 transmits the total block verification request to ECU 20 (ST112).

Next, upon receipt of the total block verification response from ECU 20, writing apparatus 10 determines whether the result of the total block verification response is normal or not (ST114).

When the determination result in ST114 is "abnormal" (ST114: NO), writing apparatus 10 abnormally terminates the process of writing data.

When the determination result in ST114 is "normal" (ST114: YES), writing apparatus 10 transmits the factory mode finishing request to ECU 20 in ST116.

After receipt of a factory mode finishing response from ECU 20 (ST116), writing apparatus 10 normally finishes the process of writing data.

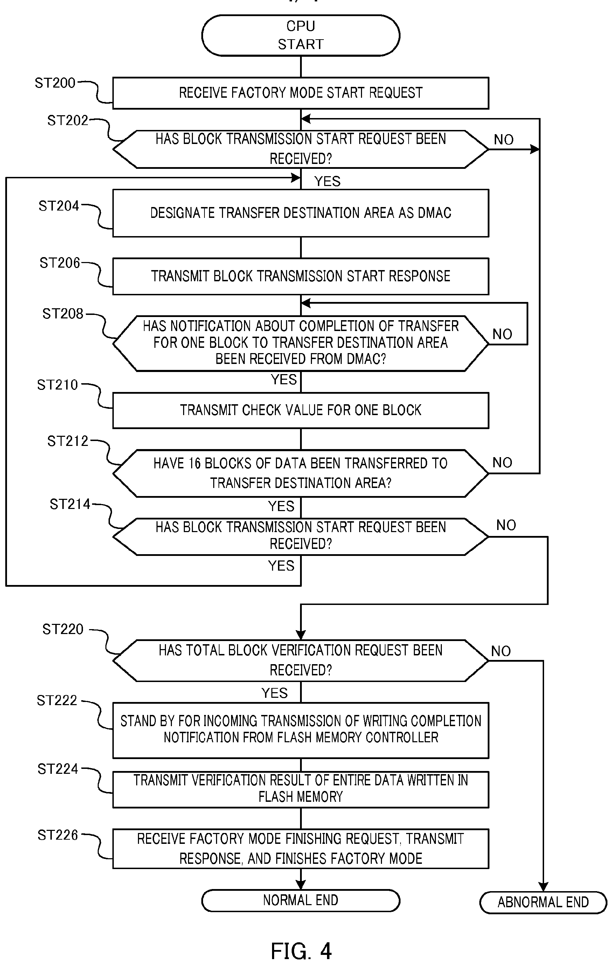

FIG. 4 is a flowchart illustrating an example of the process of writing data in CPU 30.

Upon receipt of the factory mode start request issued by writing apparatus 10, CPU 30 starts the factory mode, and transmits the factory mode start response to writing apparatus 10 (ST200).

Next, CPU 30 determines whether the block transmission start request has been transmitted from writing apparatus 10 or not (ST202). If the block transmission start request has not been transmitted (ST202: NO), CPU 30 returns the processing to the start of ST202.

Upon receipt of the block transmission start request (ST202: YES), CPU 30 designates, for DMAC 26, the transfer destination area for 256×16 frames scheduled to be stored in communication buffer 23 (ST204). As described in FIG. 2, the transfer destination area is alternately switched between RAM first area 50A and RAM second area 50B every time receipt of 16 blocks of data.

Next, CPU 30 transmits the block transmission start response to writing apparatus 10 (ST206).

Next, CPU 30 determines whether a notification about completion of transfer for one block from DMAC 26 to the transfer destination area has been transmitted or not (ST208). If the completion notification has not been transmitted (ST208: NO), CPU 30 returns the processing to the start of ST208.

Upon receipt of the completion notification in ST208 (ST208: YES), CPU 30 calculates the check value of one block of data pertaining to the completion notification (ST210). CPU 30 then transmits the calculated check value to writing apparatus 10.

Next, CPU 30 determines whether 16 blocks of data have been transferred to the transfer destination area or not (ST212). If the 16 blocks of data have not been transferred to the transfer destination area yet (ST212: NO), CPU 30 returns the processing to ST202, and stands by for incoming transmission of the next block transmission start request.

If the 16 blocks of data are transferred to the transfer destination area (ST212: YES), CPU 30 determines whether the block transmission start request has been transmitted from writing apparatus 10 or not (ST214).

Upon receipt of the block transmission start request (ST214: YES), CPU 30 returns the processing to ST204. In ST204, CPU 30 indicates, for DMAC 26, a transfer destination area different from that last time as the transfer destination area for 256×16 frames scheduled to be stored in communication buffer 23. Accordingly, the block pertaining to ST214 is transferred to the switched transfer destination area.

Upon receipt of the indication of the transfer destination area different from that last time from CPU 30, DMAC 26 issues, to the flash memory controller, the flash write instruction pertaining to 16 blocks in the last transfer destination area.

If the block transmission start request has not been transmitted (ST214: NO), CPU 30 determines whether the total block verification request has been transmitted from writing apparatus 10 or not (ST220).

Without incoming transmission of the total block verification request by writing apparatus 10 (ST220: NO), CPU 30 abnormally terminates the data writing process. This is because the check value transmitted in ST210 described above can be estimated to be inconsistent if the block transmission start request has not been transmitted from writing apparatus 10 and the total block verification request has not been transmitted. That is, this is because the 16 blocks of data stored in the transfer destination area can be estimated to include an error.

Upon receipt of the total block verification request from writing apparatus 10 (ST220: YES), CPU 30 stands by for incoming transmission of the completion notification about the flash write process pertaining to the final block from the flash memory controller (ST222).

After receipt of the completion notification about the flash write process pertaining to the final block, CPU 30 verifies the entire data written in flash memory 28, and transmits the verification result to writing apparatus 10 (ST224). The verification result includes any of "normal" or "abnormal."

Next, upon receipt of the factory mode finishing request issued by writing apparatus 10, CPU 30 transmits the factory mode finishing response to writing apparatus 10, and finishes the factory mode (ST226).

Accordingly, the process of transferring the frame to be transmitted from writing apparatus 10 into one of RAM first area 50A or RAM second area 50B, and a process of writing, into flash memory 28, the predetermined number of block data items stored in the other of RAM first area 50A or RAM second area 50B can be executed in parallel. Accordingly, time required to write the data into flash memory 28 can be reduced.

### <Modification example>

Reduction in the amount of data transmission from writing apparatus 10 to ECU 20 can further reduce the time required for the transmission. An example is hereinafter described.

In a case where the data length (called "item data length") is defined for each item of data, a part that does not reach the data length is filled with predetermined data (for example, '0xFF") (that is, subjected to padding).

Writing apparatus 10 adds the substantial length of data on each item (called "substantial data length") to the beginning of the data, and removes the padding data. Writing apparatus 10 then couples the data items, from which the padding data has been removed, to each other, divides the coupled data into blocks and frames as illustrated in FIG. 2, and sequentially transmits the blocks and frames to ECU 20.

ECU 20 having received the coupled data refers to the substantial data length, and extracts item data. ECU 20 then applies padding to the part that does not reach the item data length, and writes the data into flash memory 28.

The substantial data length is smaller than the padded data length. Accordingly, the amount of data transmission from writing apparatus 10 to ECU 20, that is, the time required for the transmission is further reduced. As a result, the entire time required for the process of writing data into flash memory 28 included in ECU 20 is further reduced.

### <Advantageous Effects>

According to the embodiment described above, CPU 30 can execute the transfer destination area switching, and start of writing into flash memory 28, triggered by reception of the block transmission start request that is information for making a query of apparatus 10 and CPU 30 is negated. As a result, the time required for data transmission from writing apparatus 10 to ECU 20 is reduced.

Writing apparatus 10 checks the corruption of the data block based on the check value transmitted from CPU 30, thereby reducing the processing load on CPU 30.

The process of writing the data stored in RAM first area 50A or RAM second area 50B into flash memory 28, and the process of transferring the data transmitted from writing apparatus 10 to RAM first area 50A or RAM second area 50B can be executed in parallel.

According to these results, the entire time required for the process of writing data into flash memory 28 is reduced. The production efficiency of ECU 20 is improved.

### Industrial Applicability

This disclosure can be used for a control apparatus for a vehicle.

### Reference Signs List

- 10: Writing apparatus
- 20: ECU
- 22: Communication I/F
- 23: Communication buffer
- 24: RAM
- 26: DMAC
- 28: Flash memory
- 30: CPU
- 40: First bus
- 42: Second bus
- 50A: RAM first area
- 50B: RAM second area

## Claims

1. A control apparatus, comprising:
a first storage section;
a second storage section that has a higher input and output rate than that of the first storage section, the second storage section including a first storage area and a second storage area that are capable of storing a predetermined number of data blocks; and
a control section that performs control of setting one of the first and the second storage areas as a transfer destination storage area, storing the data block transmitted from a writing apparatus into the transfer destination storage area, and transmitting a check value of the data block to the writing apparatus,
wherein the writing apparatus determines whether the check value transmitted from the control section is appropriate or not, and transmits a block transmission start request to the control section before transmission of a next data block in a case where the writing apparatus determines that the check value is appropriate, and
wherein, when the predetermined number of data blocks are stored in the transfer destination storage area and the block transmission start request is received from the writing apparatus, the control section switches the transfer destination storage area to another of the first and the second storage areas to store the next data block transmitted from the writing apparatus into the transfer destination storage area and transmit a check value of the next data block to the writing apparatus, and causes the predetermined number of data blocks stored in the transfer destination storage area that is the one of the storage areas before switching to be written into the first storage section in parallel with the determination of the check value of the next data block by the writing apparatus.

2. The control apparatus according to claim 1, wherein the writing apparatus divides the data block into a plurality of frames, and transmits the frames,
wherein the control apparatus further comprises a DMA controller that sequentially transfers received frames to the transfer destination storage area, and notifies the control section of a completion notification about completion of transfer of one data block in a case of the completion, and
wherein the control section receives the completion notification from the DMA controller, and transmits the check value pertaining to the one data block to the writing apparatus.

3. A method for writing data to a control apparatus,
wherein the control apparatus comprises: a first storage section; and a second storage section that has a higher input and output rate than that of the first storage section, the second storage section including a first storage area and a second storage area that are capable of storing a predetermined number of data blocks,
wherein a writing apparatus transmits the data block to the control apparatus,
wherein the control apparatus sets one of the first and the second storage areas as a transfer destination storage area, stores the data block transmitted from the writing apparatus into the transfer destination storage area, and transmits a check value of the data block to the writing apparatus,
wherein the writing apparatus determines whether the check value transmitted from the control apparatus is appropriate or not, and transmits a block transmission start request to the control apparatus before transmission of a next data block in a case where the writing apparatus determines that the check value is appropriate, and
wherein, when the predetermined number of data blocks are stored in the transfer destination storage area and the block transmission start request is received from the writing apparatus, the control apparatus switches the transfer destination storage area to another of the first and the second storage areas to store the next data block transmitted from the writing apparatus into the transfer destination storage area and transmit a check value of the next data block to the writing apparatus, and causes the predetermined number of data blocks stored in the transfer destination storage area that is the one of the storage areas before switching to be written into the first storage section in parallel with the determination of the check value of the next data block by the writing apparatus.

## Patentansprüche

1. Steuerungsvorrichtung, die umfasst:
einen ersten Speicherabschnitt;
einen zweiten Speicherabschnitt, der eine höhere Eingabe- und Ausgaberate als die des ersten Speicherabschnitts aufweist, wobei der zweite Speicherabschnitt einen ersten Speicherbereich und einen zweiten Speicherbereich beinhaltet, die fähig sind, eine vorbestimmte Anzahl von Datenblöcken zu speichern; und
einen Steuerungsabschnitt, der die Steuerung des Einstellens eines des ersten und des zweiten Speicherbereichs als Transferzielspeicherbereich durchführt, Speichern des Datenblocks, der von einem Schreibgerät übertragen wird, in den Transferzielspeicherbereich und Übertragen eines Prüfwerts des Datenblocks zu dem Schreibgerät,
wobei das Schreibgerät bestimmt, ob der Prüfwert, der von dem Steuerungsabschnitt übermittelt wird, angemessen ist oder nicht, und eine Blockübertragungsstartanforderung zu dem Steuerungsabschnitt überträgt, bevor ein nächster Datenblock übertragen wird, in einem Fall, in dem das Schreibgerät bestimmt, dass der Prüfwert angemessen ist, und
wobei, wenn die vorbestimmte Anzahl von Datenblöcken in dem Transferzielspeicherbereich gespeichert ist und die Blockübertragungsstartanforderung von dem Schreibgerät empfangen wird, der Steuerungsabschnitt den Transferzielspeicherbereich auf einen anderen des ersten und des zweiten Speicherbereichs umschaltet, um den nächsten Datenblock, der von dem Schreibgerät in den Transferzielspeicherbereich übertragen wird, zu speichern und einen Prüfwert des nächsten Datenblocks zu dem Schreibgerät zu übertragen, und bewirkt, dass die vorbestimmte Anzahl von Datenblöcken, die in dem Transferzielspeicherbereich gespeichert ist, der der eine der Speicherbereiche vor dem Umschalten ist, parallel zu der Bestimmung des Prüfwerts des nächsten Datenblocks durch das Schreibgerät in den ersten Speicherabschnitt geschrieben wird.

2. Steuerungsvorrichtung nach Anspruch 1, wobei das Schreibgerät den Datenblock in eine Vielzahl von Rahmen unterteilt und die Rahmen überträgt,
wobei die Steuerungsvorrichtung weiter eine DMA-Steuerung umfasst, die nacheinander empfangene Rahmen zu dem Transferzielspeicherbereich überträgt und den Steuerungsabschnitt über eine Abschlussbenachrichtigung über den Abschluss der Übertragung eines Datenblocks in einem Fall der Fertigstellung informiert, und
wobei der Steuerungsabschnitt die Abschlussbenachrichtigung von der DMA-Steuerung empfängt und den Prüfwert, der sich auf den einen Datenblock bezieht, zu dem Schreibgerät sendet.

3. Verfahren zum Schreiben von Daten zu einer Steuerungsvorrichtung,
wobei die Steuerungsvorrichtung umfasst: einen ersten Speicherabschnitt; und einen zweiten Speicherabschnitt, der eine höhere Eingabe- und Ausgaberate als die des ersten Speicherabschnitts aufweist, wobei der zweite Speicherabschnitt einen ersten Speicherbereich und einen zweiten Speicherbereich beinhaltet, die eine vorbestimmte Anzahl von Datenblöcken speichern können,
wobei ein Schreibgerät den Datenblock zu der Steuerungsvorrichtung überträgt,
wobei die Steuerungsvorrichtung einen des ersten und des zweiten Speicherbereichs als Transferzielspeicherbereich einstellt, den Datenblock, der von dem Schreibgerät übertragen wird, in den Transferzielspeicherbereich speichert und einen Prüfwert des Datenblocks zu dem Schreibgerät überträgt,
wobei das Schreibgerät bestimmt, ob der Prüfwert, der von der Steuerungsvorrichtung übertragen wird, angemessen ist oder nicht, und eine Blockübertragungsstartanforderung zu der Steuerungsvorrichtung, bevor ein nächster Datenblock übermittelt wird, in einem Fall übermittelt, in dem das Schreibgerät bestimmt, dass der Prüfwert angemessen ist, und
wobei, wenn die vorbestimmte Anzahl von Datenblöcken in dem Transferzielspeicherbereich gespeichert ist und die Blockübertragungsstartanforderung von dem Schreibgerät empfangen wird, die Steuerungsvorrichtung den Transferzielspeicherbereich auf einen anderen des ersten und des zweiten Speicherbereichs umschaltet, um den nächsten Datenblock, der von dem Schreibgerät in den Transferzielspeicherbereich übertragen wird, zu speichern und einen Prüfwert des nächsten Datenblocks zu dem Schreibgerät zu übertragen, und bewirkt, dass die vorbestimmte Anzahl von Datenblöcken, die in dem Transferzielspeicherbereich gespeichert ist, der derjenige der Speicherbereiche vor dem Umschalten ist, parallel zu der Bestimmung des Prüfwerts des nächsten Datenblocks durch das Schreibgerät in den ersten Speicherabschnitt geschrieben wird.

## Revendications

1. Appareil de commande, comprenant :
une première section de mémorisation ;
une seconde section de mémorisation, laquelle présente un débit d'entrée et de sortie supérieur à celui de la première section de mémorisation, la seconde section de mémorisation comprenant une première zone de mémorisation et une seconde zone de mémorisation aptes à la mémorisation d'un nombre prédéfini de blocs de données ; et
une section de commande, laquelle effectue la commande du paramétrage de la première ou de la seconde zone de mémorisation en tant que zone de mémorisation de destination de transfert, mémorisant le bloc de données transmis à partir d'un appareil d'écriture dans la zone de mémorisation de destination de transfert et la transmission d'une valeur de vérification du bloc de données à l'appareil d'écriture,
dans lequel l'appareil d'écriture détermine si la valeur de vérification transmise à partir de la section de commande est appropriée ou non et transmet une demande de début de transmission de bloc à la section de commande avant la transmission d'un bloc de données suivant dans un cas où l'appareil d'écriture détermine que la valeur de vérification est appropriée, et
dans lequel, lorsque le nombre prédéfini de blocs de données est mémorisé dans la zone de mémorisation de destination de transfert et la demande de début de transmission de bloc est reçue de l'appareil d'écriture, la section de commande commute la zone de mémorisation de destination de transfert vers une autre des première et seconde zones de mémorisation pour mémoriser le bloc de données suivant, transmis de l'appareil d'écriture dans la zone de mémorisation de destination de transfert et pour transmettre une valeur de vérification du bloc de données suivant à l'appareil d'écriture et amène le nombre prédéfini de blocs de données mémorisés dans la zone de mémorisation de destination de transfert, laquelle est ladite des zones de mémorisation avant la commutation, à être écris dans la première section de mémorisation en parallèle avec la détermination de la valeur de vérification du bloc suivant de données par l'appareil d'écriture.

2. Appareil de commande selon la revendication 1, dans lequel l'appareil d'écriture divise le bloc de données en une pluralité de trames et transmet lesdites trames,
dans lequel l'appareil de commande comprend en outre un dispositif de commande de DMA, lequel transfère de manière séquentielle les trames reçues vers la zone de mémorisation de destination de transfert et lequel notifie à la section de commande une notification d'achèvement de l'achèvement du transfert d'un bloc de données dans le cas de l'achèvement, et
dans lequel la section de commande reçoit la notification d'achèvement du dispositif de commande de DMA et transmet la valeur de vérification se rapportant au bloc de données à l'appareil d'écriture.

3. Procédé d'écriture de données sur un appareil de commande,
dans lequel l'appareil de commande comprend : une première section de mémorisation ; et une seconde section de mémorisation, laquelle présente un débit d'entrée et de sortie supérieur à celui de la première section de mémorisation, la seconde section de mémorisation comprenant une première zone de mémorisation et une seconde zone de mémorisation, lesquelles sont aptes à la mémorisation d'un nombre prédéfini de blocs de données,
dans lequel un appareil d'écriture transmet le bloc de données à l'appareil de commande,
dans lequel l'appareil de commande définit la première ou la seconde zone de mémorisation en tant que zone de mémorisation de destination de transfert, mémorise le bloc de données transmis à partir de l'appareil d'écriture dans la zone de mémorisation de destination de transfert et transmet une valeur de vérification du bloc de données à l'appareil d'écriture,
dans lequel l'appareil d'écriture détermine si la valeur de vérification transmise par l'appareil de commande est appropriée ou non et transmet une demande de début de transmission de bloc à l'appareil de commande avant la transmission d'un bloc de données suivant dans un cas où l'appareil d'écriture détermine que la valeur de vérification est appropriée, et
dans lequel, lorsque le nombre prédéfini de blocs de données est mémorisé dans la zone de mémorisation de destination de transfert et la demande de début de transmission de bloc est reçue de l'appareil d'écriture, l'appareil de commande commute la zone de mémorisation de destination de transfert vers une autre des première et seconde zones de mémorisation, pour mémoriser le bloc de données suivant transmis de l'appareil d'écriture à la zone de mémorisation de destination de transfert, pour transmettre une valeur de vérification du bloc de données suivant à l'appareil d'écriture et amène le nombre prédéfini de blocs de données mémorisé dans la zone de mémorisation de destination de transfert, laquelle est ladite des zones de mémorisation avant la commutation à être écris dans la première section de mémorisation, en parallèle avec la détermination de la valeur de vérification du bloc suivant de données par l'appareil d'écriture.
